# EUROPEAN PATENT APPLICATION

(11) **EP 1 879 151 A2**
(43) Date of publication of application: **16.01.2008**
(21) Application number: 07111922.6
(22) Date of filing: 06.07.2007
(51) Int. Cl.: G07B 15/00

(54) **Method for detecting the location of a vehicle, On-Board-Unit and Enforcement Unit**

(30) Priority: 14.07.2006 EP 06014734
(71) Applicant: Vodafone Holding GmbH, 40213 Düsseldorf (DE)
(72) Inventor: Borman, Maurice, 4001, Tiel (NL)
(74) Representative: Cullinane, Marietta Bettina

(57) **Abstract**

The present invention relates to a method for detecting the location of a vehicle (3) in an area, wherein the vehicle (3) has at least one On-Board-Unit (4) assigned to it and at least one enforcement unit (1) for sending signals to and/or receiving signals from the On-Board-Unit (4) is provided. The method is characterized in that the communication channel (7) for communication between the at least one On-Board-Unit (4) and at least one enforcement unit (1) and/or the characteristics of the area (8, 9, 13, 14) covered by the enforcement unit (1) are set in accordance to the conditions within the area (8, 9, 13, 14) to be covered and/or the nature of the enforcement unit (1). The invention also relates to an OBU and an enforcement unit (1) for the described purpose.

## Description

The present invention relates to a method for detecting the location of a vehicle, an On-Board-Unit and an enforcement unit.

For monitoring purposes or for determining and enforcing fees such as toll fees or road charge for usage of specific streets or certain areas the position of vehicles has to be determined. Different solutions have been suggested. The basic model, wherein the driver has to supply information about the vehicle's position manually, is labour and cost intensive and therefore new models have been sought. One approach, which has been suggested, is the usage of microwave based communication systems. These systems are also referred to as Dedicated Short Range Communication (DSRC). An advantage of these systems is the reduced amount of information necessary and the simplified comparison and adjustment of information and status, such as for example the license plate of a vehicle. By means of the information, which is provided, data from different sources only has to be compared, which simplifies the process significantly over a method, which exclusively relies on a digital evaluation of a digital picture or on other sensors.

One disadvantage of the usage of DSRC systems is, however, that the terminal, which has to be provided at the vehicle will have to comprise the mandatory DSRC components. Other terminals, which do not have such a component will not automatically be compatible with the system. This causes increased maintenance costs or terminals may not be admitted due to the lack of compatibility. The same applies for systems wherein not only the detection of a vehicle but also the localizing used for charging of toll fees is performed by means of DSRC.

There have also been attempts to utilize mobile devices or terminals of a cellular network in a system for localizing and charging vehicles. Such an approach is described for example in EP 0 750 828 B1. The position of a vehicle is determined by using a mobile station of a mobile telephone network. In addition to the functions within the mobile telephone network, the mobile station evaluates signals received from a transmitter, which forms a locally limited trigger cell. The received information is compared to information on the trigger cell received emitted in the mobile telephone network. Only if the information corresponds, the signals received from the transmitter associated with the trigger cell are used for position finding.

One disadvantage of this solution is that specific signalling routines have to be followed by the mobile device in order to not interfere with a communication connection which might be established from the mobile station at the point of entry of a trigger cell.

The problem underlying the present invention is to provide a solution which allows a flexible, yet targeted and accurate, detection of vehicles within an area, which can preferably be used for enforcing road charging schemes.

The invention is based on the finding that this problem can be solved if the communication means between an On-Board-Unit (OBU) and an enforcement unit are selected by taking into account that different requirements have to be addressed in different situations.

According to a first aspect of the invention, the problem is solved by a method for detecting the location of a vehicle in an area, wherein the vehicle has at least one On-Board-Unit (OBU) assigned to it and at least one enforcement unit for sending signals to and/or receiving signals from the On-Board-Unit (OBU) is provided. The method is characterized in that the enforcement unit emits signals on a dedicated communication channel for communication with at least one On-Board-Unit (4),
wherein the On-Board-Unit is set to monitor the dedicated communication channel.

The OBU may be assigned to a vehicle, by providing information, which allows the determination of the respective vehicle, such as the license plate number or the name or an identification number of the owner of the vehicle on the OBU. In the OBU also information on the OBU may be stored such as an OBU ID as well as the current position and status of the OBU.

The area to be covered by the enforcement unit will hereinafter also be referred to as an enforcement or pico cell. The enforcement unit is designed to act according to a corresponding network entity of the cellular network. In particular, the enforcement unit will, like the BTS (Base Transceiver Station) of a GPRS network or the Node B of a UMTS network, be capable of emitting and receiving signals. The emission may be performed by means of broadcast.

The communication channel according to the present invention is a transmission resource, which may be defined by frequency, code and/or time.

The enforcement unit is preferably equipped with at least one antenna for sending and receiving signals to and from OBU's. The signals transmitted between these two entities preferably comprise information and/or data. Preferably the signals comprise at least one signal from the enforcement unit to the OBU triggering the OBU to provide information to the enforcement unit or a different processing unit or to store current information in the OBU.

A presetting of the communication channel is beneficial, as the OBU will not have to determine whether a channel of the cellular communication network presently functions as an enforcement channel or not after a signal has been received in that channel. Hence, the processing requirements at the OBU are reduced and the response time of the OBU to a received signal is decreased. According to a preferred embodiment, the preset communication channel information is stored within the OBU before its operation. Furthermore, by using a dedicated communication channel the area to be covered or the pico cell can be operated at any location at any time without further notification. In particular, no assignment process of channels and network channel list update process for neighboring cells of the cellular communication network are necessary as it is required in the prior art. The assignment of channels via the overlaying network necessitate the availability of the network and in addition increases processing time of the enforcement process, in particular the identification process of an enforcement unit from an On-Board-Unit.

According to a preferred embodiment, the communication channel between the OBU and the enforcement unit is a channel different from the channels used within the cellular mobile communication or telephone network which is overlaying the communication area to be covered by the enforcement unit. The cellular mobile communication or telephone network will hereinafter also be referred to as the overlaying network.

By setting the communication channel between the OBU and the enforcement unit, which is hereinafter also referred to as enforcement channel, to be different from the physical channels of the cellular mobile communication network, interference between the network and the pico cell can be avoided. Nevertheless, the same communication technology can be employed, so that the OBU can be a terminal of a cellular communication network, such as a mobile phone. In addition, regular communication terminals for voice and data, such as cellular phones, which are not equipped to be used for enforcement, do not need to be diverted from the pico cell. Such a diversion would require additional non-standard measures in violation of the communication protocol prevailing within the communication network. Also if more than one operator provides coverage in the area of the pico cell interference does not have to be expected. Finally, the separation of the enforcement channel from the network channels allows for the pico cell to be operated at any location at any time without further notification. In particular, no assignment process of channels and network channel list update process for neighboring cells of the cellular communication network are necessary.

Preferably the communication channel is defined by the frequency used for communication and/or the code used and the channel information is optionally stored within the OBU.

The frequency of the communication or enforcement channel may be within the range of the operator of a cellular network. In that case, the frequency will, however, be in an unused area of the frequency range. In that case preferably a frequency is selected which is not used by any network operator. Alternatively, it will be possible to select a frequency for the enforcement channel which is outside of the frequency range of the operators of cellular networks.

By choosing an enforcement channel which differs in terms of channel characteristics, such as the frequency or the code used, from the communication channels of a cellular communication network, it will be easy to distinguish the enforcement channel from other channels at the OBU, which might be a terminal or cell phone of the communication network. Future networks, such as 4G-Networks (fourth generation) may define additional or alternative characteristics. In those networks the enforcement channel may then be set to differ in that respect to allow distinction of the enforcement channel.

According to one embodiment, the On-Board-Unit extracts information from on the enforcement unit from the signal received via the dedicated communication channel. This information may be an identification of the enforcement unit, e.g. a Cell ID of the area covered by the enforcement unit. By extracting this information the On-Board-Unit will be able to use the extracted information further. The extracted information may be used to identify the enforcement unit to which information about the On-Board-Unit is to be transmitted. Alternatively or additionally, the extracted information may be used to determine the location and possible the direction of movement of the On-Board-Unit, which will be described in detail later.

According to a preferred embodiment, the enforcement unit measures the speed of On-Board-Units within the area covered by the enforcement unit and depending on the measuring result changes the power supply for the communication with the at least one On-Board-Unit. The power supply for communication with the at least one On-Board-Unit is preferably the power supply to at least one antenna of the enforcement unit.

In addition or alternatively, the expected amount of On-Board-Units within the covered area or the amount of vehicles to which On-Board-Units are assigned may be considered for determining the size of the area covered by the enforcement unit.

The characteristics of the pico cell which may be adjusted according to the expected amount of vehicles within the area and / or the expected velocity is preferably the size of the pico cell. If the amount of vehicles exceed a certain number, the capacity of the enforcement unit receiving the response from the respective OBU's may not be sufficient. Hence, the accuracy of the information obtained may be lower. For areas, where the amount of vehicles with respective OBU's is expected to be high, the size of the pico cell will therefore be chosen to be small. The amount of cars to be expected within the area can be determined by information available from maps and alike. In a city the size of pico cell may for example be chosen to be smaller than on a country road. In addition or alternatively, the expected speed of the vehicles may be considered. For example on highways, where the speed of the vehicles is expected to be higher, the size of the pico cell may be increased. The criteria of speed for selecting the size also allows to ensure that an OBU in a vehicle which is triggered within the pico cell will have sufficient time to respond before the vehicle leaves the pico cell.

The speed of the vehicles can be estimated or can be based on measurements performed in parallel to the enforcement. The latter embodiment has the additional advantage, that the size of the pico cell can dynamically be adjusted according to the measurement results. The size of the pico cell can be changed by changing the power supplied within the enforcement unit and thereby changing the reach of the antennas. In a preferred embodiment the measurement unit for measuring the speed and determining the average speed may be connected to the power control of the enforcement unit via a feed back loop.

Where the enforcement unit has more than one antenna, the amount of antennas and the direction of the antennas can be taken into account. In this case, preferably the cell characteristics are changed to assign different cell ID's to pico cells of the different antennas, even if the antennas are part of the same enforcement unit. Such an embodiment allows for a simple detection of the moving direction of a vehicle. Preferably two antennas are provided at an enforcement unit and the antennas point in different directions. If the enforcement unit is provided alongside of a straight street, the antennas may be pointing in opposite directions.

Preferably the information transmitted to the at least one On-Board-Unit comprises an indication of the area covered by the enforcement unit, in particular a cell ID of the enforcement cell.

According to one embodiment the enforcement unit will transmit information to the at least one On-Board-Unit comprising at least an indication of the antenna of the enforcement unit. This embodiment is in particular beneficial for enforcement units where at least two antennas are provided any may be pointing in different directions. The pico cells of each of the antennas will then be assigned a different cell ID. The order in which the vehicle passes the two pico cells may give information on the moving direction. It will, however, also be sufficient for the OBU to attach to one of the pico cells. The first pico cell which will be entered by the OBU will, due to the assigned cell ID, already provide information on the direction of movement of the OBU. Preferably, the pico cells of the enforcement unit will all operate on one channel, e.g. at one frequency. The use of the same channel at a location gives more confidence that unwanted signals are masked by the wanted signal. If different frequencies would be used inaccurate readings may occur due to reflection and propagation.

The cell ID, as a characteristics of the pico cell, may also be different to a normal cell ID, if a mobile enforcement unit is being used. For fixed and nomadic enforcement units, it is not necessary to trigger each OBU on an individual base. A broadcast signal (i.e. the Cell ID) is sufficient for downlink communication within the enforcement area, i.e. pico cell. The OBU monitors the presence of this Cell ID at a regular time interval. On the other hand, for a mobile enforcement unit it might be necessary to address a single OBU. Hence, the set of Cell ID's is split into two sub sets. The first sub set triggers all OBU's within the range of the pico cell, while the second sub set triggers a single OBU only. In order to achieve the latter, a temporary cell ID is based on the license number plate.

The temporary cell ID, to which a specific OBU will respond, may be stored in the OBU. It is, however, also possible that an algorithm is stored in the OBU, which allows the OBU to determine, whether the temporary cell ID is addressed to it, i.e. if a response has to be transmitted. The algorithm may be a decryption algorithm corresponding to an encryption algorithm used at the enforcement unit.

This allows verification of compliance of a single vehicle by enforcement officers during surveillance in motion.

The size of the pico cell may also be of relevance for the transmission of a response to the triggering signal from the OBU to the enforcement unit. In general the size of the pico cell has to be selected to be large enough for the response to reach the enforcement unit before the OBU exits out of the pico cell. If the cell size cannot be or should not be enlarged, the safe receipt of the response at the appropriate enforcement unit may be ensured by accelerating the transmission. It has been found that this can be achieved if a terminal of a cellular mobile network is being used as a stand-alone short range device.

The OBU, which may be a mobile device of a cellular network, upon receipt of a triggering signal from the enforcement unit can initiate a transmission of information via an uplink transmission channel to the enforcement unit.

By using an uplink transmission channel, which can be initiated by the mobile device the transmission of information related to the mobile device, in particular related to its function as an On-Board-Unit of the monitoring or road charging system, can be effected fast. A high set up time of a communication channel, which is necessary for standard transmission of information within the cellular network can be avoided. In addition the usage of a standard communication channel of the cellular network incurs a considerable amount of traffic within the network which has to be handled by the respective Base Stations (BS) of the cellular network.

In that embodiment the transmission is instead performed via an uplink transmission or transport channel directly to the enforcement unit. The enforcement unit is designed to act according to a corresponding network entity of the cellular network. In particular, the enforcement unit may, like the BTS (Base Transceiver Station) of a GPRS network or the Node B of a UMTS network, be capable of receiving the information transmitted via the uplink transmission channel. The transmission channel may be the Random Access Channel (RACH) or any other uplink channel that can be initiated by a mobile device of a cellular network.

Within the transmission channel the information to be transmitted may be provided instead of the encrypted bits, which in standard usage of the channel within the cellular network would include request information for requesting a signalling channel. The encrypted bits which may be used to transmit information may be the so called DATA bits of a GPRS-system, which are 36 encrypted bits following the TRAIN of the channel. In 3G UMTS- and 4G system similar implementation may apply, i.e. bits provided in the respective channel will be used to transfer information from the mobile device or OBU to the enforcement unit. If more than one OBU transmits information to the enforcement unit, the respective information will be identified to belong to the individual OBU by the information within the channel used for transmission.

The mobile device may be assigned to a vehicle, by providing information, which allows the determination of the respective vehicle, such as the license plate number or the name or identification number of the owner of the car on the mobile device. Hence, the mobile device will act as an On-Board-Unit OBU. Within the OBU information on the OBU such as an ID of the OBU but also the current position and status of the OBU may be stored.

The area covered by an enforcement unit will hereinafter also be referred to as an enforcement or pico cell.

The triggering signal from the enforcement unit may include information on the enforcement unit, e.g. a cell ID of the pico cell covered by the enforcement unit. This information will be used to initiate the transmission of information from the mobile device to the appropriate enforcement unit, i.e. the enforcement unit from which the triggering signal has been received.

With the present invention it is possible to assure that the information will be received at the appropriate enforcement unit, as the time for initiating the transmission of information is low. Hence, the vehicle will still be within the pico cell of the enforcement unit, where the triggering signal originated from at the time of transmission of the information. An increase in size of the pico cell, which would require increased power supply to the enforcement unit is not necessary.

The uplink transmission channel used for transmission of information within the inventive protocol may be provided within the cellular network of the mobile device for signalling channel requests to a Base Station (BS) of the cellular network. In particular the channel may be the RACH.

Furthermore, according to the present invention the communication channel for communication between the at least one On-Board-Unit (OBU) and at least one enforcement unit and/or the characteristics of the area covered by the enforcement unit may be set in accordance to the conditions within the area to be covered and/or the nature of the enforcement unit.

By setting the communication means, i.e. the communication channel and/or the area or cell characteristics, in accordance with conditions in the area, the communication between the OBU and the enforcement unit can be improved. In particular, interferences or inaccurate results can be avoided.

The conditions to be considered may be current conditions or conditions, which have been determined before the enforcement unit is activated. These conditions may include the expected amount of vehicles within the area and/or the expected speed of the vehicles. Also the current speed of vehicles may be considered.

The conditions within the area to be covered may also be the existence of a cellular mobile communication network, which is also referred to as overlaying network. In this embodiment the communication channel between the OBU and the enforcement unit is set to a channel different from the channels used within the cellular mobile communication or telephone network.

According to a further aspect, the present invention relates to an On-Board-Unit (OBU) for detecting the location of a vehicle within an area comprising at least one communication unit for communication with at least one enforcement unit. The OBU is characterized in that it further comprises a storage unit for storing information on the dedicated communication channel to be used for the communication with the at least one enforcement unit.

The information to be stored in the storage unit is the channel to be used for communication with the enforcement unit. The information may be the frequency of the channel which should be monitored for signals from the enforcement unit. This channel is preferably different from the communication channels of a cellular communication network, which is overlaying the area covered by the enforcement unit, i.e. the pico cell.

The OBU may be a terminal of a cellular communication network overlaying the area covered by the enforcement unit.

The OBU is preferably adapted to perform or participate in the inventive method. The OBU may be provided with software to initiate the monitoring of the channel preset and saved in the storage unit of the OBU.

According to a further aspect of the invention it relates to an enforcement unit for enforcing schemes on vehicles being present within a specified area. The enforcement unit is characterized in that it comprises at least one generating unit for generating cell related information signals and a sending unit for sending signals via a dedicated communication channel to at least one On-Board-Unit of a vehicle.

The cell related information is preferably a cell ID. The cell ID may be generated based on the antenna which covers the respective pico cell. Alternatively or additionally, the cell ID may be generated based on input information such as a license number of a vehicle.

According to one embodiment the enforcement unit comprises at least two antennas for sending and / or receiving signals from On-Board-Units of vehicles within the area covered by the enforcement unit. The antennas are powered by the enforcement unit and preferably operate on the same frequency or use the same code for signal transmission.

Additionally or alternatively, the enforcement unit may comprise a speed measuring unit for measuring the speed of vehicles within the area covered by the enforcement unit. The speed measuring unit is preferably connected to a power controller of the enforcement unit.

In one embodiment, the enforcement unit may comprise a generating unit for generating temporary information on at least one area to be covered. This temporary information may be a temporary cell ID for addressing only one On-Board-Unit via a mobile enforcement unit.

The enforcement unit may further comprise a receiving unit for receiving information from at least one mobile device via an uplink transmission channel and a processing unit for processing the information received via this channel.

The receiving unit of the enforcement unit will be set to the uplink channel, so that upon receipt of information via this channel, the information may be transferred to the processing unit and the relevant information will become available at the enforcement unit immediately. The processing of the information will be the extracting of data content from the received signal. The extraction may be performed by decrypting the encrypted bits according to the encryption method prevailing for the transmission channel or cellular network used.

The mobile device may have a receiving unit for receiving a triggering signal from at least one enforcement unit and a transmission unit for initiating a transmission to the enforcement unit via a dedicated uplink channel. The mobile device may be a cellphone or any other terminal of a cellular network such as GPRS or UMTS. For filling the dedicated uplink channel with information on the OBU function of the mobile device instead of with a request for signalling channel, the mobile device may be provided with software attending to this different usage of the channel. The mobile device will act as a stand-alone short range device (SRD). It will use the Random Access Channel (RACH) or any other uplink channel that can be initiated from the mobile device to send data directly from the OBU to the enforcement unit, while bypassing the cellular network protocols.

Features and advantages which are described for the method also apply to the On-Board-Unit and Enforcement-Unit, respectively, and vice versa.

The units and the parts thereof may be realized as hard ware and/or software units and may also at least partial be combined to one single unit.

The invention will now be described again with reference to the enclosed figures, wherein:
Figure 1 schematically shows a system for the present invention;
Figure 2 schematically shows the channels used for communication and enforcement;
Figure 3 schematically shows a dynamic pico cell;
Figure 4 schematically shows an enforcement unit with two antennas; and
Figure 5 schematically shows the usage of a mobile enforcement unit; and
Figure 6 schematically shows time frames, time slots and bursts according to a 2G system.

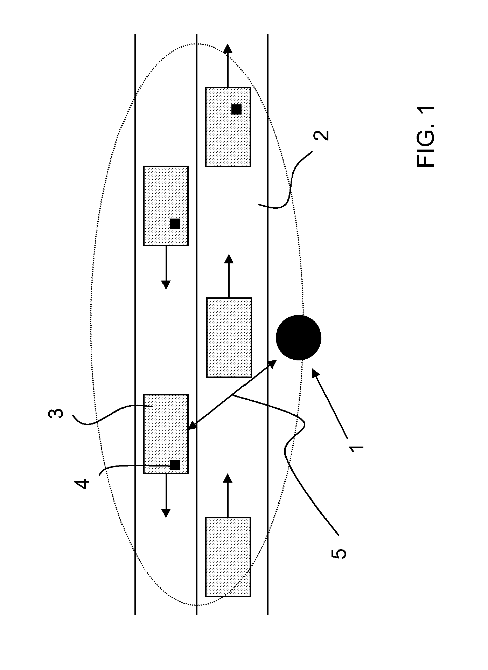

In Figure 1 a section of a system, wherein the inventive method may be realized, is shown schematically. The system comprises an enforcement unit 1, which is depicted in Figure 1 to be a fixed unit, arranged next to a street 2, where vehicles 3 are to be monitored. At different points of interest, such as along the street or at exits of highways, additional enforcement units (not shown) may be provided. The enforcement unit 1 may be connected to a central unit (not shown), where information obtained at the enforcement unit 1 may be further processed. The connection between the enforcement unit 1 and the central unit may be a wireless communication connection. It is, however, also possible, that the enforcement unit is a stand alone unit, which only emits signals and/or information, but does not receive or further process information.

In the system shown in Figure 1 some vehicles 3 driving on the street 2 are equipped with an On-Board-Unit (OBU) 4. The OBU 4 may be firmly mounted in the vehicle 3 or may be loosely positioned in it. In the latter case, the OBU 4 may be a terminal of a wireless communication network, such as a cell phone. The OBU 4 of each vehicle 3 possesses information on the vehicle 3, such as the license plate number. In addition, the OBU 4 has information on the enforcement system. Preferably, the OBU 4 has a storage unit for storing information obtained beforehand and/or during the trip. Information on the enforcement system which was obtained beforehand preferably comprises information on the communication channel 5 to be used for communication with enforcement units 1 of the enforcement system. In addition the information on the enforcement system may be information on the protocol for communicating with the enforcement unit 1.

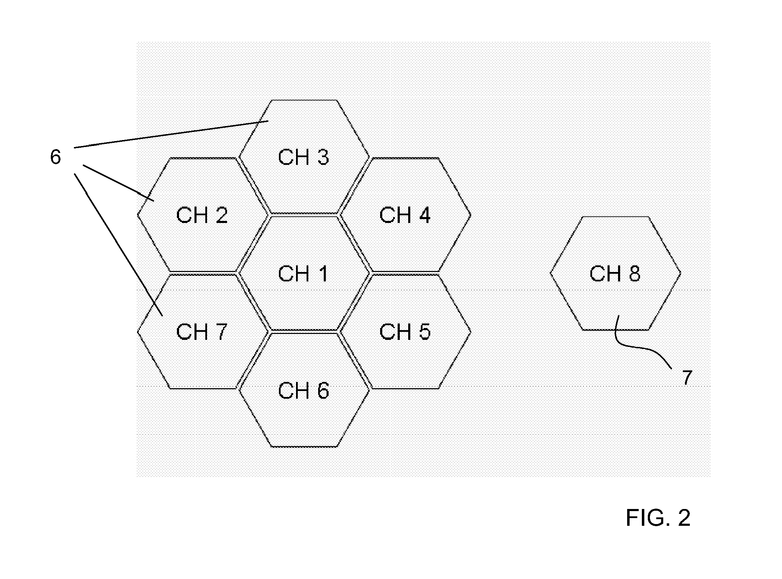

The dedicated channel for communication between the enforcement unit 1 and the OBU 4 will now be described with reference to Figure 2. In Figure 2 channels 6 (CH1-Ch7) of a cellular communication network, such as GPRS or UMTS, are schematically shown. Depending on the cellular technology utilized in the cellular network, each channel 6 will have frequencies and / or code assigned thereto. The channels 6 are physical channels of the network.

A cellular communication network using such channels 6 for communication in general comprises cells. A cell is an area covered by one antenna system (Base station BS) for communication with mobile stations, such as cell phones (not shown) within the respective area. To avoid interference between signals transmitted to and from the BS, channels 6 are assigned to a cell by means of a network channel plan. To support hand-over of the mobile station from one cell to the other, when the mobile station is moving across the cell limit, each cell has a list of channels 6 being used by its neighboring cells.

An enforcement unit 1 for road charging schemes, which are equipped with so called pico cells, is shown in Figure 1. This enforcement unit 1 may be operated in an area, where one or more cells of the cellular network overlay the pico cell. Rather than assigning an enforcement channel for communication between the OBU 4 and the enforcement unit 1 for each cell according to the network channel plan, i.e. considering the channel plan for each cell, according to the invention an enforcement channel 7 may be preset and is applicable regardless of the channels within a cells of the overlaying communication network.

The enforcement or dedicated channel 7 is assigned to the road charging scheme only. This channel 7 is not part of the set of channels 6 of the overlay network. The dedicated channel 7 may be at a frequency or frequency range, which is different from the operating frequencies of the overlay network. This is schematically shown in Figure 2. The regular communication devices or mobile stations of the communication network are hence not affected by the pico cell and in particular by signals transmitted over the enforcement channel 7.

According to one embodiment of the present invention, all OBU's 4 of an enforcement system have knowledge on this dedicated channel 7 prior to operation.
At regular time intervals, the OBU 4 scans the channel 7 in order to allow detection of an enforcement unit 1.

Even though the example of the dedicated channel 7 has been described with being different in terms of frequencies from the channels 6 of an overlay network, it has to be noted that the dedicated channel 7 may in addition or alternatively differ from the channels 6 of the overlay network in terms of codes or other channel characteristics, depending on the cellular technology utilized.

While a OBU 4 scans the channel 7 and maybe detects a signal from an enforcement unit 1 on that channel, the signaling on the channels 6 with a BS of a cellular mobile communication network can continue and is not disturbed. The detection of a signal on the channel 7 will be considered at OBU 4 as detection of the respective enforcement unit 1 without the necessity of further verification steps.

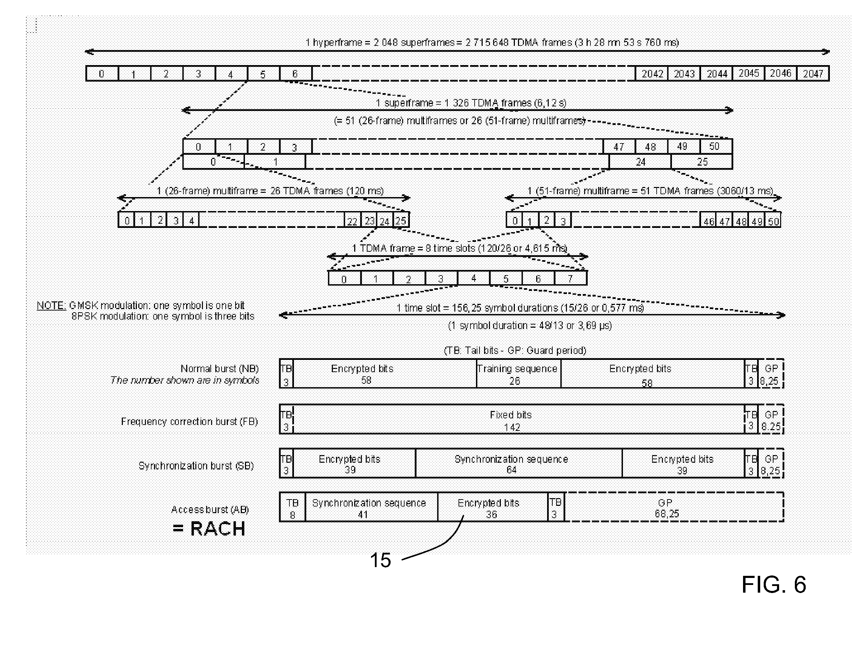

Upon detection of the respective enforcement unit 1, i.e. receipt of a triggering signal the OBU 4 may use the Random Access Channel (RACH) of an overlaying cellular network to send data directly from the OBU 4 to the enforcement unit 1. This transmission bypasses the cellular network protocols. The RACH is filled with OBU data instead of signaling data. This schematically shown in Figure 6 for a 2G system, where the 36 encrypted bits indicated with reference number 15 of the Access Burst will be used for the OBU information. The transmission, however, may be performed according to the protocol of the cellular network. In the example shown in Figure 6, hence, time frames and time slots as defined by the protocol are being used. The amendment according to the invention is, hence, the usage of the 36 encrypted bits for OBU information.

The enforcement unit 1 will in that case be equipped with a dedicated receiver to receive the modified RACH and to process its data content immediately.

The transmission and preferably the processing of the information will be performed while the vehicle 3 is still within the range of the enforcement unit 1, i.e. within the pico cell.

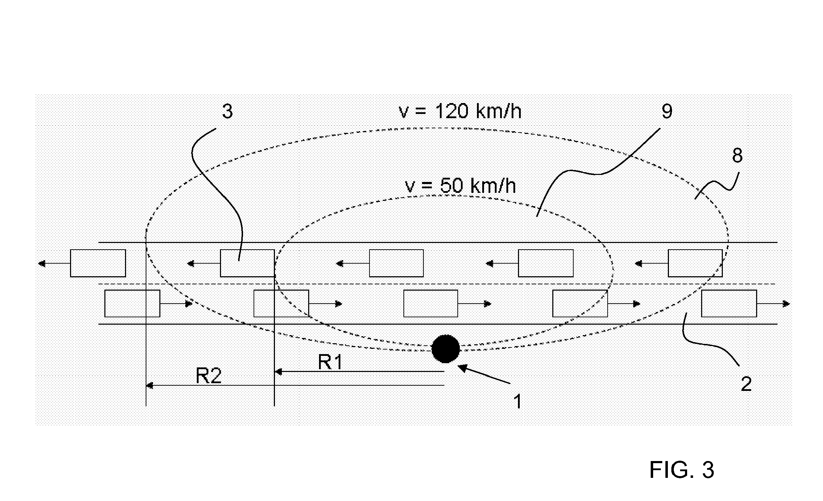

As shown in Figure 3, a dynamic power control of the pico cell may be used. Thereby the size of the pico cell, i.e. the area covered by the enforcement unit 1, can be adjusted. In Figure 3 two pico cells are indicated by doted lines. The outer or larger pico cell 8 may be used, when an average speed of the vehicles 3 on the street is assumed to be or has been measured to be at a high speed, e.g. 120 km/h. If the speed of the vehicles 3 is assumed to be lower or has been measured to be lower, the pico cell 9, i.e. the smaller pico cell might be used. This allows fine tuning of the position when the vehicle 3 detects the enforcement unit 1. A feedback loop between a power controller and speed measurement is implemented at the enforcement unit 1.

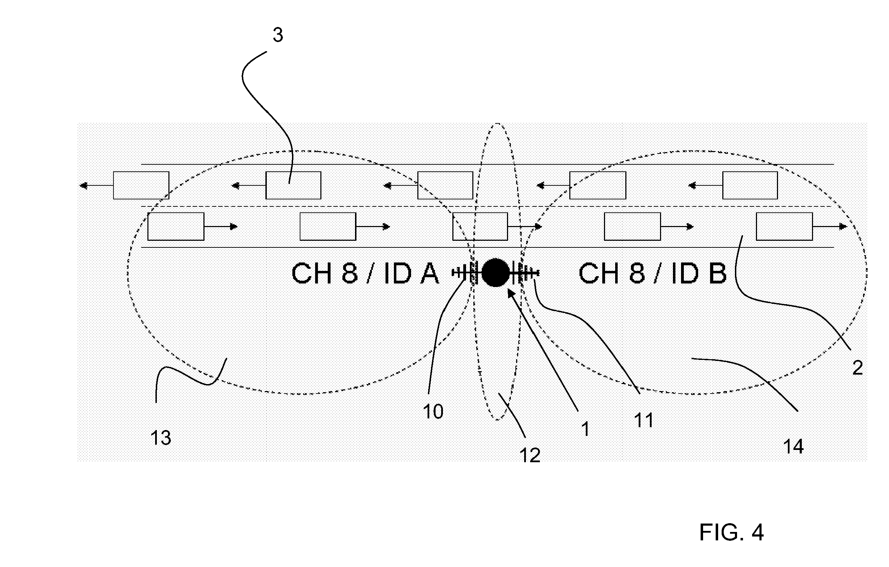

Finally, in Figure 4 an embodiment of an enforcement unit 1 is show, which includes two antennas 10, 11. The two antennas 10, 11 are located at the same position but differ in orientation, in particular are pointing in opposite directions. While antenna 10 is pointing to the left, antenna 11 is point towards the right. The enforcement unit 1 of this embodiment thereby generates to pico cells 13 and 14. As indicated in Figure 4 the pico cells 13, 14 will be assigned different cell ID's. A vehicle moving on the lane of the street closest to the enforcement unit 1, i.e. on the lower lane in Figure 4, will first detect the cell with the ID A, whereas a vehicle moving on the other lane, i.e. upper lane, will first detect the cell with the ID B. In this embodiment the enforcement unit will broadcast it's cell ID.

By means of the order in which the pico cells are being detected by an OBU 4 in the vehicle 3, the direction of movement of the vehicle 3 can be easily determined.

The two pico cells 13, 14 of the enforcement unit 1 are operating with the same enforcement channel 7. Thereby unwanted signals are masked by the wanted signal. The small interference zone 12 near the antennas 10, 11 can be neglected. It is assumed that the vehicle 3 will have picked up the respective first pico cell 13, 14 by the time it reaches this interference zone 12.

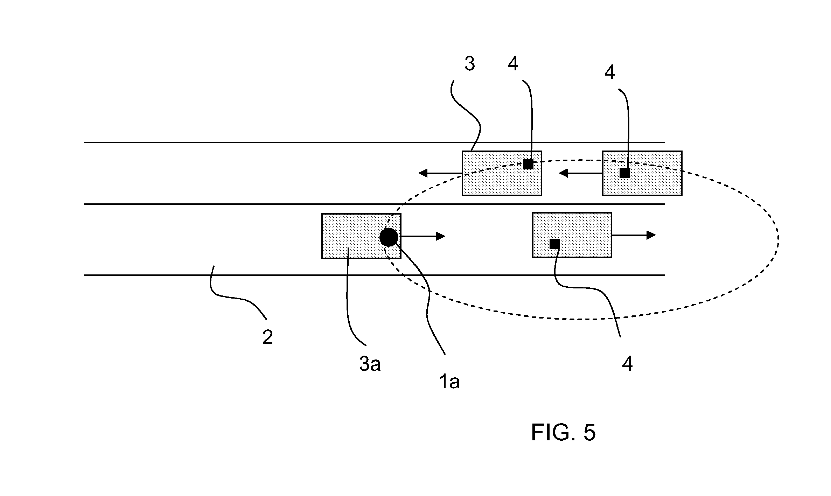

Referring now to Figure 5, a further embodiment of the invention will be described. Vehicle 3a is equipped with a mobile enforcement unit 1 a. Such a mobile enforcement unit 1 a may for example be used by enforcement officers to verify the compliance of a vehicle 3, e.g. whether the vehicle 3 is registered to an enforcement system, while driving on a road 2. The enforcement unit 1a will in general be deactivated, i.e. not powered and will thus not send signals. If the officer sees a vehicle 3 and intends to verify the compliance, the enforcement unit 1 a may be activated. At that point, the enforcement unit 1 a would trigger all vehicles 3 within the pico cell 8a. In the situation of Figure 5, hence, all three vehicles, provided they are equipped with an OBU 4 would be triggered. As this is not intended, the pico cell of the mobile enforcement unit 1 a may be managed different from normal or fixed pico cells.

Within the pico cell in general a signal including the respective cell ID will be broadcast. The cell ID will identify the pico cell. If only one vehicle is to be monitored, a different cell ID may be issued. The temporary cell ID in that case may be based on the license number of the vehicle 3, which the officer can obtain from the license plate. With that cell ID only the OBU 4 of the respective vehicle 3 with the appropriate license plate number will be triggered.

If for example the Cell ID: 0 is being broadcasted, all OBU's within reach of the pico cell will respond. If in contrast a temporary Cell ID, such as 74972908 is being broadcast, only the OBU within the vehicle with licence plate AB-12-CD will respond.

## Claims

1. Method for detecting the location of a vehicle (3) in an area, wherein the vehicle (3) has at least one On-Board-Unit (4) assigned to it and at least one enforcement unit (1) for sending signals to and/or receiving signals from the On-Board-Unit (4) is provided, **characterized in that** the enforcement unit (1) emits signals on a dedicated communication channel (7) for communication with at least one On-Board-Unit (4), wherein the On-Board-Unit (4) is set to monitor the dedicated communication channel (7).

2. Method according to claim1, **characterized in that** the communication channel (7) is a channel different from the channels (6) used within a cellular mobile network overlaying the communication area (8, 9, 13, 14) to be covered by the enforcement unit (1).

3. Method according to claim 1 or 2, **characterized in that** the communication channel (7) is defined by the frequency used for communication and/or the code used.

4. Method according to anyone of claims 1 to 3, **characterized in that** the communication channel (7) is preset within the On-Board-Unit (4).

5. Method according to anyone of claims 1 to 4, **characterized in that** the On-Board-Unit (4) extracts information on the enforcement unit (1) from the signal received via the dedicated communication channel (7).

6. Method according to anyone of claims 1 to 5, **characterized in that** the enforcement unit (1) measures the speed of On-Board-Units (4) within the area (8, 9, 13, 14) covered by the enforcement unit (1) and depending on the measuring result changes the power supply for the communication with the at least one On-Board-Unit (4).

7. Method according to anyone of claims 1 to 6, **characterized in that** the information transmitted to the at least one On-Board-Unit (4) comprises an identication of the area (8, 9, 13, 14) covered by the enforcement unit (1), in particular a cell ID.

8. Method according to anyone of claims 1 to 7, **characterized in that** the enforcement unit (1) transmits information to the at least one On-Board-Unit (4) comprising at least an indication of the antenna of the enforcement unit (1) covering the area (8, 9, 13, 14)

9. Method according to claim 7, **characterized in that** the cell ID is generated at the enforcement unit and is temporary, in particular includes an indication of at least one On-Board-Unit (4).

10. Method according to any of claims 1 to 9, **characterized in that** the mobile device (4) upon receipt of a triggering signal from the enforcement unit (1) initiates a transmission of information via an uplink transmission channel to the enforcement unit (1).

11. On-Board-Unit for detecting the location of a vehicle (3) within an area (8, 9, 13, 14) comprising at least one communication unit for communication with at least one enforcement unit (1), **characterized in that** the On-Board-Unit (4) further comprises a storage unit for storing information on the dedicated communication channel (7) to be used for the communication with the at least one enforcement unit (1).

12. On-Board-Unit according to claim 12, **characterized in that** it is a terminal of a cellular communication network overlaying the area (8, 9, 13, 14) covered by the enforcement unit (1).

13. Enforcement-Unit for enforcing schemes on vehicles (3) being present within an area, **characterized in that** the enforcement unit (1) comprises at least one generating unit for generating cell related information signals and a sending unit for sending signals via a dedicated communication channel (7) to at least one On-Board-Unit (4) of a vehicle (3).

14. Enforcement unit according to claim 13, **characterized in that** it comprises at least two antennas (10, 11) for sending and / or receiving signals from On-Board-Units (4) of vehicles (3) within the area (8, 9, 13, 14) covered by the enforcement unit (1).

15. Enforcement unit according to claim 13 or 14, **characterized in that** it comprises a speed measuring unit for measuring the speed of vehicles within the area (8, 9, 13, 14) covered by the enforcement unit (1).

16. Enforcement unit according to anyone of claims 13 to 15, **characterized in that** it further comprises a power controller which is connected to the measurement unit.

17. Enforcement unit according to anyone of claims 13 to 16, **characterized in that** it further comprises a generating unit for generating temporary information on at least one area to be covered.
